Europäisches Patentamt

(19) European Patent Office

Office européen des brevets

(11) Numéro de publication: **0 184 969**
**B1**

(12) **FASCICULE DE BREVET EUROPEEN**

(45) Date de publication du fascicule du brevet: **11.04.90**

(51) Int. Cl.⁵: **B 60 P 3/08**

(21) Numéro de dépôt: **85440068.6**

(22) Date de dépôt: **15.11.85**

(54) **Dispositif pour la préhension et le soutien des véhicules par les roues, applicable notamment au transport de véhicules automobiles.**

(30) Priorité: **19.11.84 FR 8417710**

(43) Date de publication de la demande:
**18.06.86 Bulletin 86/25**

(45) Mention de la délivrance du brevet:
**11.04.90 Bulletin 90/15**

(84) États contractants désignés:
**AT BE CH DE GB IT LI LU NL SE**

(56) Documents cités:
**DE-B-1 284 611**
**DE-B-2 456 292**

(73) Titulaire: **LOHR S.A.**
**14, rue du 14 Juillet**
**F-67 980 Hangenbieten (FR)**

(72) Inventeur: **Andre, Jean-Luc**
**3, rue de Schaffhouse**
**F-67000 - Strasbourg (FR)**
Inventeur: **Fity, Christian**
**14, Quai de L'Ill**
**F-67400 - Illkirch Graffenstaden (FR)**

(74) Mandataire: **Metz, Paul**
**Cabinet METZ PATNI 95, rue de la Ganzau**
**F-67100 Strasbourg (FR)**

Courier Press, Leamington Spa, England.

## Description

La présente invention concerne un dispositif pour la préhension et le soutien individuel des véhicules par les roues, applicable plus particulièrement aux convois porte-voitures, tel que défini dans le préambule de la revendication 1.

Dans le souci de transporter un niveau supplémentaire dans les gabarits routiers réglementaires, les inventeurs ont imaginé et mis au point un nouveau véhicule porte-voitures sans plateaux porteurs, dans lequel les voitures sont supportées par des structures transversales propres à chaque train de roues. Ces structures sont mobiles le long de longerons extérieurs supportés par les poteaux de la remorque ou du véhicule porteur.

On gagne ainsi l'épaisseur des longerons et il devient possible, en encastrant légèrement les pavillons des voitures inférieures dans les châssis des voitures supérieures, de loger trois niveaux de voitures dans la quasi-totalité des gabarits routiers existants.

Les structures porteuses de ce type de véhicules s'étendent de part et d'autre de chaque longeron sous la forme d'éléments tubulaires à extrémités divergentes pour le soutien des roues par le contact des pneumatiques. Les extrémités sont recourbées pour venir se fixer de façon amovible dans un dispositif de verrouillage déplaçable et immobilisable le long des longerons extérieurs porteurs.

La réalisation du chargement nécessite pour cette nouvelle conception de véhicules porteurs, l'application des structures transversales sur un plan de chargement, leur immobilisation en position déterminée par le programme de chargement. Ces structures, posées et immobilisées sur le plan de chargement, constituent une surépaisseur que doivent franchir les voitures, avant leur mise en place.

De plus, ces structures doivent être présentées et placées avec précision avant la montée des voitures sur le plan de chargement.

Finalement, l'opération de chargement comprend plusieurs phases de recherche et de manipulation des structures déplaçables, peu appréciées du personnel et difficiles à réaliser.

On connaît déjà des ensembles de soutien de voiture par leurs roues sur un châssis porteur.

Il s'agit ainsi du système décrit dans le brevet français FR—A—2 391 091 au nom de Mr. LAURENT dans lequel des barres parallèles soutiennent le véhicule par les roues d'un même train de roues. Ces barres sont à écartement réglable par logement de leurs extrémités dans des encoches disposées à intervalles constant.

Ces barres ne peuvent assurer ni un calage longitudinal car elles roulent sur elles-mêmes, ni une stabilisation transversale car elles restent parallèles.

Il s'agit par ailleurs d'un ensemble mettant en oeuvre deux supports de roues d'une même ligne de roues sous la forme de cadres à distance réglable par emmanchement dans un support linéaire longitudinal. Le support linéaire est assujetti à un poteau qui permet, grâce à un dispositif de levage, des déplacements verticaux. Le débattement en écartement des supports de roue s'avère notablement limité en raison de la résistance mécanique des supports.

Par ailleurs, il n'existe pas de dispositif d'adaptation aux différents diamètres de roues et finalement, le jumelage des supports s'effectuant entre ceux d'une même ligne de roues, la sécurité générale de maintien n'est pas garantie. Par ailleurs, les manipulations de chargement s'avèrent difficiles et nombreuses.

Il existe finalement un dispositif à bras pivotants et à commande centralisée décrit dans le brevet allemand SCHARF DE—B—1 284 611.

Ce dispositif s'avère d'une exploitation difficile en raison d'une commande centrale nécessaire supprimant toute possibilité de commande individuelle aussi bien en pivotement des bras qu'en déplacement longitudinal de chaque ensemble de bras.

Par ailleurs, cette solution nécessite un ensemble mécanique se développant entre les deux roues d'un même train.

La présente invention a pour but de remédier à ces différents inconvénients en proposant un dispositif de préhension et de soutien des voitures portées, facile à mettre en oeuvre et qui reste en place sur les longerons extérrieurs lors des différentes phases de chargement et de déchargement.

Le dispositif de préhension et de soutien selon l'invention, comporte, dans ce but, les caractéristiques définies dans la partie caractérisante de la revendication 1.

Les principaux avantages de l'invention peuvent s'énoncer comme suit:

Dispositif que reste en place sur les longerons lors de toutes les manoeuvres de chargement et de déchargement même en position escamotée dans laquelle il libère le passage pour le chargement et le déchargement de chaque niveau.

Rapidité et facilité de mise en oeuvre.

Mise en place et verrouillage de part et d'autre de chaque roue, uniquement après montée et arrêt du véhicule à l'emplacement prévu.

Gain global de temps substantiel aussi bien au chargement qu'au déchargement.

Il peut coulisser facilement sur le longeron.

Dispositif identique pour tous les niveaux de chargement et escamotable par une manoeuvre simple et rapide.

La mise en oeuvre du dispositif s'effectue intégralement du sol à l'extérieur de véhicule.

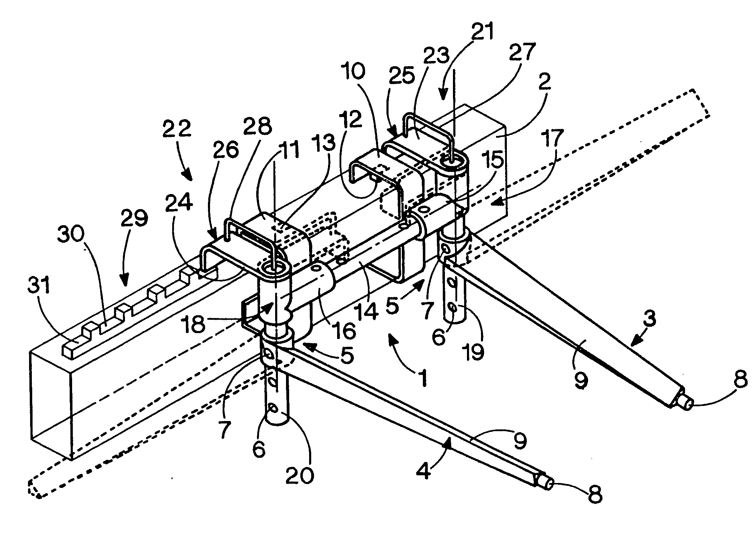

D'autres caractéristiques et avantages de l'invention sont consignés dans la description qui suit effectuée à titre d'exemple non limitatif sur un mode d'exécution en référence au dessin annexé dans lequel la figure unique est une vue en perspective du mode de réalisation de base du dispositif de préhension et de soutien selon l'invention.

Le dispositif de préhension et de soutien selon l'invention se compose d'un chariot porteur 1 déplaçable sur le longeron adjacent 2 et de deux bras de soutien 3 et 4 escamotables, montés sur le chariot porteur. Les bras 3 et 4 sont destinés à supporter et à maintenir immobile dans de bonnes conditions de sécurité chaque véhicule transporté en établissant des plans-supports inclinés et ponctuels au droit de chaque roue, de part et d'autre du pneu.

Selon la variante représentée, les bras 3 et 4 sont montés articulés sur le chariot porteur 1 plus particulièrement à pivotement entre une position opérante dans laquelle ils se trouvent perpendiculaires au longeron adjacent 2 en léger pincement du longeron concerné vers son homologue disposé en face de lui et une position escamotée de repos ou de rangement dans laquelle ils se trouvent disposés parallèles au chant latéral adjacent du longeron 2.

Le dispositif selon l'invention est constitué de deux pièces symétiques réunies entre elles, à écartement variable. La description ci-après pourrait se limiter à une seule d'entre elles.

Plus précisément, les bras 3 et 4 présentent une extrémité conformée en douille 5 traversée par un passage transversal 6 pour son immobilisation à différents niveaux verticaux sur un axe de pivotement par goupille ou broche 7, l'extrémité opposée affectant la forme d'un axe 8 pour la fixation d'un dispositif de brêlage.

Le corps du bras présente une forme profilée en plan incliné 9 de contact avec le pneu en légère diminution de section du longeron 2 vers le plan médian du véhicule porteur.

On examinera maintenant les caractéristiques détaillées du chariot porteur 1.

Le chariot porteur est conformé pour venir s'enfiler sur et coulisser le long des longerons extérieurs tels que 2 définissant sur le véhicule porteur les niveaux intermédiaires et supérieurs de chargement.

Une variante selon un mode de réalisation possible présente les éléments essentiels suivants.

Deux coulisseaux 10 et 11 de forme générale en C présentant une section légèrement plus importante que celle du profilé constituant le longeron 2 viennent s'accrocher à la manière de griffes sur le dit longeron et forme à elles seules la liaison de montage et de déplacement. Ces coulisseaux comporteront avantageusement des patins de glissement 12 et 13 pour faciliter le mouvement de coulissement ou sont garnis d'un revêtement de glissement ou équipés de moyens de roulement. Ils sont réunis par une barre, par exemple cylindrique, d'écartement 14 portée en extrémité par des douilles 15 et 16 solidaires des coulisseaux 10 et 11. L'écartement réglable est réalisé par exemple par des passages transversaux transversées par des goupilles.

Le chariot se poursuit de part et d'autre de la barre d'écartement 14 par des pièces palières d'extrémité 17 et 18 portant horizontalement ladite barre d'écartement 14 et verticalement les axes verticaux 19 et 20 sur l'extrémité inférieure desquels sont montés les bras de soutien 3 et 4. Ces axes verticaux sont déplaçables verticalement.

Les axes verticaux sont solidaires en partie supérieure de verrous 21 et 22 constitués chacun par une poignées de manoeuvre et de verrouillage sous la forme d'un fer plat 23 ou 24 à extrémité recourbée 25 ou 26 surmontée d'un élément de préhension 27 et 28.

Ces fers plats possèderont, de façon avantageuse, la même largeur que les coulisseaux 10 et 11. Les poignées et bras d'un même sous-ensemble sont situés selon la variante décrite dans un même plan vertical. Le léger pincement entre les bras résulte d'une faible inclinaison des courbures 25 et 26. Celles-ci présentent avantageusement une surface de contact pourvue d'aspérités en vue d'améliorer le blocage.

Comme indiqué, les axes verticaux 19 et 20 peuvent coulisser librement le long des pièces palières 17 et 18, le blocage vertical vers le bas étant assuré par le contact du chant supérieur du longeron avec le fer plat dont l'extrémité 25 ou 26 est conformée selon le même arrondi que la courbure d'arête des longerons.

Un dispositif supplémentaire 29 de blocage par crans 30 peut être apporté en montant, par exemple, une crémaillère 31 le long de la face latérale extérieure du longeron. Cette crémaillère coopérant avec l'extrémité des fers plats 25 ou 26 assure un blocage longitudinal parfait de haute sécurité.

Il est à remarquer que le chariot n'encaisse pas les efforts principaux de charge. En effet, les efforts provenant de la charge sur les roues du véhicule transporté sont transmis directement par l'ensemble de verrouillage au longeron porteur.

Plus précisément, de par sa position encastrée dans la mâchoire formée par les bras 3 et 4, la roue du véhicule transporté fait subir auxdits bras un effort correspondant à la charge du véhicule supportée par cette roue.

L'effort de la roue sur chaque bras se décompose en un effort vertical transmis directement au longeron par le fer plat reposant sur le dessus du longeron et en un effort horizontal qui crée un couple repris par l'extrémité recourbée 25 ou 26. Ce couple tend à coincer l'ensemble par appui de l'extrémité recourbée contre la face extérieur du longeron.

Cette force d'appui ou de coincement augmente automatiquement avec la poussée due au freinage. On a ainsi conçu un dispositif autobloquant à force de blocage en augmentation automatique proportionnelle à l'effort de poussée sur le chariot.

La mise en oeuvre du dispositif selon l'invention s'avère particulièrement simple.

Les véhicules à transporter sont amenés sur le plan de chargement à l'endroit prévu. Le dispositif selon l'invention est amené au droit de chaque roue et centré approximativement. Les bras porteurs sont dégagés de leur position rabattue par action sur les poignées. Il suffit de les soulever pour libérer la rotation des axes verticaux. Ceux-ci sont ensuite bloqués par engagement des poignées sur les longerons après un adjustement éventuel du chariot en centrage.

Le dispositif est ainsi bloqué sans autre manipulation ou manoeuvre.

Au déchargement, il suffit de libérer les poignées en les soulevant. On immobilise l'ensemble bras-poignée en position rabattue en faisant chevaucher le coulisseau adjacent par la poignée et en venant l'enfoncer après une rotation d'un quart de tour. Dans cette position, le chant du fer plat bute contre la face avant du coulisseau garantissant ainsi une immobilisation satisfaisante en position de rangement. Dans cette position, le dispositif de préhension n'occupe aucune surface utile sur le plan de chargement.

## Revendications

1. Dispositif du type à bras pivotants pour la préhension et le soutien individuel de véhicules par chacune de leurs roues, applicable en particulier aux convois porte-voitures pour la constitution de plusieurs niveaux de chargement se composant de deux bras de soutien (3 et 4) déplaçables et immobilisables en différents points sur toute la longueur de longerons porteurs, caractérisé en ce que les deux bras de soutien (3 et 4) sont pivotants et escamotables individuellement, propres à chaque roue et jumelés entre eux par un chariot de translation (1) déplaçable et immobilisable en tout point sur toute la longueur de longerons porteurs (2) définissant avec un longeron homologue en regard un plan de chargement pour la réalisation d'étages de chargement sur le véhicule porteur et en ce que lesdits bras se prolongent par une structure d'accrochage sur le longeron porteur (2) adjacent.

2. Dispositif selon la revendication 1, caractérisé en ce que l'axe de pivotement de chaque bras de soutien (3 ou 4) escamotable individuellement par pivotement est porté par une pièce palière (17 ou 18) et prolongé horizontalement vers le haut par un verrou (21 ou 22) sous la forme d'une poignée solidaire d'un fer plat (23 ou 24) à extrémité recourbée (25 ou 26) venant en contact simultané de coincement en position bloquée avec la face supérieure du longeron et sa face extérieure en vue d'une auto-immobilisation par coincement-accrochage sur le longeron porteur, auto-immobilisation s'améliorant par la charge transportée et ses mouvements.

3. Dispositif selon la revendication 1, caractérisé en ce que chaque poignée formant le verrou (21 ou 22) est disposée dans le même plan que le bras de soutien correspondant (3 ou 4).

4. Dispositif selon les revendications 1 et 2, caractérisé en ce que les pièces palières (17 et 18) sont solidaires d'un coulisseau (10 ou 11) en éclisse enserrant complètement ou partiellement le longeron (2) et jumelées entre elles par une barre (14) permettant le réglage d'écartement, barre portée par des douilles horizontales (15 et 16) solidaires des pièces palières (17 et 18) et des coulisseaux (10 et 11).

5. Dispositif selon les revendications précédentes, caractérisé en ce que les extrémités des poignées de manoeuvre (21 et 22) sont recourbées vers le bas et de longueur suffisante pour venir en contact d'appui avec la face latérale extérieure du longeron et assurer ainsi simultanément le blocage des bras et du chariot et en ce que les extrémités de poignées sont recourbées légèrement en biais pour assurer le léger pincement des bras (3 et 4) tout en gardant lesdits bras et les poignées correspondantes dans le même plan vertical.

6. Dispositif selon la revendication 1, caractérisé en ce que les bras sont conformés en un plan incliné vers le bas, tangent à la bande de roulement de la roue à supporter.

7. Dispositif selon les revendications 1 et 6, caractérisé en ce que l'extrémité libre des bras (3 et 4) est conformée de façon adaptée pour recevoir un dispositif d'arrimage.

8. Dispositif selon les revendications précédentes, caractérisé en ce que le niveau vertical des bras est réglable verticalement par coulissement des axes verticaux le long des pièces palières (17 et 18) et verrouillage par goupille ou broche dans des passages transversaux correspondants.

## Patentansprüche

1. Vorrichtung mit Schwenkarmen zum Greifen und individuellem Abstützen von Fahrzeugen an ihren Rädern, insbesondere anwendbar bei Autotransportern zur Schaffung von mehreren Ladeflächen, bestehend aus zwei Tragarmen (3 und 4), die auf der gesamten Länge von tragenden Längsholme verschiebbar und arretierbar sind, dadurch gekennzeichnet, daß die zwei Tragarme (3 und 4) jeweils für jedes Rad unabhängig voneinander schwenkbar und einklappbar sind, paarweise zusammengefaßt durch einen beweglichen und an jedem Punkt auf der gesamten Länge der tragenden Längsholme (2) arretierbaren Verschiebeschlitten (1), wobei ein Längsholm mit einem gleichartigen, gegenüber befindlichen Längsholm eine Ladefläche zur Schaffung von Ladeetagen darstellt und daß sich diese Arme in einer Einrichtung zum Anhängen an den benachbarten tragenden Längsholm fortsetzen.

2. Vorrichtung nach Anspruch 1, dadurch gekennzeichnet, daß die Drehachse jedes durch Schwenken einklappbaren Tragarmes (3 oder 4) von einem Lagerbock (17 oder 18) getragen ist und sich oben horizontal verlängert durch einen Riegel (21 oder 22) in Form eines an einem Flacheisen (23 oder 24) mit umgebogenem Ende (25 oder 26) befestigen Hardgriffes, wobei das Flacheisen in Blockierstellung gleichzeitig mit der Oberseite und der Außenseite des Längsholmes im Sinne einer Selbstarretierung durch Festhalten und Einhängen auf dem tragenden Längsholm in Kontakt kommt, wobei sich die Selbstarretierung noch durch die beförderte Ladung und deren Bewegungen verbessert.

3. Vorrichtung nach Anspruch 1, dadurch gekennzeichnet, daß jeder den Riegel (21 oder 22) bildende Handgriff in der selben Ebene wie der zugehörige Tragarm (3 oder 4) angeordnet ist.

4. Vorrichtung nach den Ansprüchen 1 und 2, dadurch gekennzeichnet, daß die Lagerböcke (17 und 18) mit einem Schienengleitstück (10 oder 11) verbunden sind, das den Längsholm (2) vollständig oder teilweise umfaßt und die paarweise durch ein Querstück (14) verbunden sind, welches eine Regulierung des Abstandes ermöglicht, wobei das Querstück von horizontalen mit den Lagerböcken (17 und 18) und den Gleitstücken (10 und 11) verbundenen Buschsen (15 und 16) getragen ist.

5. Vorrichtung nach den vorhergehenden Ansprüchen, dadurch gekennzeichnet, daß die Enden der Bedienungshandgriffe (21 und 22) in ausreichender Länge nach unten umgebogen sind, damit sie mit der Außenseite des Längsholmes in Berührung kommen und sich dort abstützen, um so gleichzeitig die Blockage der Arme und des Schlittens zu gewährleisten, und daß die Enden der Handgriffe etwas schräg umgebogen sind, um eine leichte Konvergenz der Arme (3 und 4) zu erreichen, während die Arme und die zugehörigen Handgriffe jeweils in der selben Vertikalebene bleiben.

6. Vorrichtung nach Anspruch 1, dadurch gekennzeichnet, daß die Arme in Form einer schräg nach unten verlaufenden Fläche tangential an die Laufläche des zu tragenden Rades angepaßt sind.

7. Vorrichtung nach den Ansprüchen 1 und 6, dadurch gekennzeichnet, daß das freie Ende der Arme (3 und 4) so ausgebildet ist, daß man eine Zurreinrichtung ansetzen kann.

8. Vorrichtung nach den vorhergehenden Ansprüchen, dadurch gekennzeichnet, daß die Höhenlage der Arme in vertikaler Richtung verstellbar ist, indem man die vertikalen Achsen in den Lagerböcken (17 und 18) verschiebt und durch einen Splint oder Bolzen in den entsprechenden Durchgangsbuchsen sichert.

**Claims**

1. A device of the pivoting arm type for gripping and individually supporting vehicles by each of their wheels, particularly applicable to vehicle transporting convoys, for making up several levels of loading, consisting of two support arms (3 and 4) which are displaceable and lockable at different points over the entire length of longitudinal bearers, characterised in that the two support arms (3 and 4) are individually pivotable and retractable, peculiar to each wheel and twinned inter se by a carriage (1) which is displaceable and lockable at any point over the length of the longitudinal bearers (2) defining together with an homologous longitudinal member which is facing them a loading level adapted to create levels of loading on the carrier vehicle and in that the said arms are extended by a structure adapted to be hooked onto the adjacent longitudinal bearer member (2).

2. A device according to Claim 1, characterised in that the pivoting axis of each support arm (3 or 4) which can be retracted individually by pivoting is carried by a bearing member (17 or 18) and is horizontally extended upwardly by a bolt (21 or 22) which takes the form of a handle rigid with a flat iron member (23 or 24) having a curved end (25 or 26) which comes in sumultaneous contact in the locked position with the upper face of the longitudinal member and its outer face for self-immobilisation by being hooked onto the longitudinal bearer, this self-immobilisation being improved by the load which is being transported and by any movements thereof.

3. A device according to Claim 1, characterised in that each handle which forms the bolt (21 or 22) is disposed in the same plane as the corresponding suport arm (3 or 4).

4. A device according to Claims 1 and 2, characterised in that the bearing members (17 and 18) are rigid with a slider (10 or 11) in the form of a cover plate which completely or partially encloses the longitudinal member (2) and which are twinned with each other by a bar (14) permitting adjustment of the spacing between them, the said bar being carried by horizontal members (15 and 16) rigid with the bearing members (17 and 18) and the sliding members (10 and 11).

5. A device according to the preceding Claims, characterised in that the ends of the operating handles (21 and 22) are curved downwardly and are of sufficient length that they can come into bearing contact with the outer lateral face of the longitudinal member and so simultaneously ensure locking of the arms and of the carriage and in that the ends of the handles are curved slightly on a bias to ensure a slight gripping of the arms (3 and 4) while maintaining the said arms and the corresponding handles in the same vertical plane.

6. A device according to Claim 1, characterised in that the arms are shaped in a downwardly inclined plane tangent to the tread of the wheel to be supported.

7. A device according to Claims 1 and 6, characterised in that the free end of the arms (3 and 4) is so shaped that it can accommodate a stowing means.

8. A device according to the preceding Claims, characterised in that the vertical level of the arms is vertically adjustable by a sliding of the vertical axes along the bearing members (17 and 18) and by pin or spindle locking in the corresponding transverse passages.